# FASCICULE DE BREVET EUROPEEN

(11) **EP 2 399 822 B1**
(45) Date de publication et mention de la délivrance du brevet: **09.10.2013**
(21) Numéro de dépôt: 11170931.7
(22) Date de dépôt: 22.06.2011
(51) Int. Cl.: B64C 1/40, B64C 1/06, H02G 3/32

(54) **Dispositif pour le maintien d'un matelas isolant et la fixation de systèmes**
Vorrichtung zur Fixierung einer Dämmmatte, und Befestigung von Systemen
Device for supporting an insulated mattress and attaching systems

(30) Priorité: 22.06.2010 FR 1002610
(43) Date de publication de la demande: 28.12.2011
(73) Titulaire: Airbus Operations, 31060 Toulouse (FR)
(72) Inventeur: Sabadie, Lionel, 31200 Toulouse (FR); Courtin, Guillaume, 31100 Toulouse (FR); Andrieu, Gilles, 31700 Beauzelle (FR); Tomasi, Marc, 31100 Toulouse (FR)
(74) Mandataire: Santarelli

(56) Documents cités:
- EP-A1- 0 320 377
- EP-A1- 0 561 107
- GB-A- 1 049 510
- US-A1- 2005 082 431
- US-A1- 2009 159 750

## Description

La présente invention concerne un dispositif de maintien de matelas isolant et de fixation de systèmes. La présente invention concerne le domaine aéronautique et plus particulièrement la construction d'aéronefs.

Un exemple de l'art antérieur est fourni par le document US 2009/0159750 A1.

De manière habituelle, un fuselage d'aéronef présente une ossature formée de cadres et de lisses. L'enveloppe extérieure du fuselage est fixée sur les cadres et les lisses. Lorsque l'aéronef est destiné à voler à haute altitude, compte tenu des températures extérieures auxquelles il doit être soumis, il est nécessaire de réaliser une isolation thermique du fuselage. Il est alors connu de recouvrir la face intérieure de la peau formant l'enveloppe du fuselage de matelas isolants se présentant sous la forme de lés ou de panneaux souples. Ces matelas sont appelés matelas de peau. Il convient également d'isoler thermiquement chaque cadre. On utilise alors des matelas présentant une structure similaire à celle des matelas de peau mais dont la forme est adaptée pour venir enrober les cadres à l'intérieur du fuselage. Ces matelas sont appelés par la suite matelas de cadre.

Les cadres du fuselage servent également de supports pour divers systèmes. On entend ici par système des équipements de l'aéronef ainsi que les câblages électriques, les réseaux hydrauliques, les réseaux pneumatiques, les conduits d'air pour la ventilation et la pressurisation à l'intérieur du fuselage, ....

Les cadres du fuselage sont alors percés de trous d'une part pour permettre la fixation des matelas isolants et d'autre part pour permettre le support et la fixation des systèmes. Ces trous fragilisent les cadres et doivent parfois être compensés par des renforts structuraux ce qui complique donc la conception de l'aéronef.

En outre, en ce qui concerne les matelas, il convient d'adapter leur forme aux divers dispositifs de fixation prévus. Des trous, des coupes, entailles, ... doivent être prévus dans les matelas pour permettre le passage d'un dispositif de fixation, s'adapter à la structure du fuselage, .... Les trous et entailles réalisés dans les matelas dégradent leur performance d'isolation et sont sources de ponts thermiques (et acoustiques) et elles réduisent donc les performances des matelas.

Il convient donc de limiter à la fois le nombre de trous réalisés dans la structure de l'aéronef (cadre et/ou autre pièce structurelle) ainsi que dans les matelas isolants (matelas de peau et matelas de cadre).

Le document FR-2 933 376 montre ainsi par exemple un dispositif de fixation de matelas isolant et un procédé de pose de matelas isolant dans un fuselage d'aéronef permettant de limiter le nombre de trous à réaliser dans les cadres de l'aéronef. Le dispositif décrit dans ce document comprend une portion formant crochet adaptée pour venir coiffer une aile du cadre et pincer ce dernier seule ou en coopération avec un élément structurel de l'aéronef de façon à assurer la fixation du dispositif au cadre. Une forme de réalisation de ce dispositif comprend une première pince de matelas de cadre porté par une première membrure destinée à s'étendre du premier côté du cadre, une deuxième pince de matelas de cadre portée par une deuxième membrure destinée à s'étendre du second côté du cadre, une première pince de matelas de peaux portée par la première membrure et une deuxième de matelas de peaux portée par la deuxième membrure.

La présente invention a alors pour but de fournir un système permettant d'une part le maintien de matelas isolants et d'autre part le support de systèmes en limitant à la fois les trous à réaliser dans la structure de l'aéronef (cadre, ...) et d'autre part dans lesdits matelas isolants.

Avantageusement, la mise en oeuvre d'un tel système sera facile et/ou d'un prix de revient limité et/ou d'une masse aussi réduit que possible.

À cet effet, la présente invention propose un dispositif pour le maintien d'un matelas isolant et la fixation de systèmes dans un aéronef, comportant une base présentant deux extrémités à partir de chacune desquelles s'étend un bras.

Selon la présente invention, au moins un bras présente une partie en forme de U présentant deux branches sensiblement parallèles, et ledit dispositif comporte en outre au moins un support pour recevoir un système.

La structure comportant la base et les deux bras permet de monter le dispositif sur un cadre et de maintenir un matelas isolant. La partie en forme de U permet quant à elle le positionnement précis du dispositif par rapport à la structure sur laquelle est monté le dispositif en venant coopérer avec un élément structurel qui vient se loger entre les branches de la partie en forme de U. Cette dernière peut être soit rajoutée sur le bras concerné, soit le bras peut lui même présenter la forme en U.

Dans un dispositif selon la présente invention, on peut prévoir que la base de forme allongée définit un plan, dit plan de référence, et que les bras s'étendent sensiblement perpendiculairement audit plan de référence.

Le dispositif selon l'invention est tel que la base de forme allongée, les bras et la partie en forme de U ne forment qu'une seule pièce. Un tel ensemble est alors élastique et sa déformation élastique peut être utilisée pour maintenir un matelas isolant en position sur un cadre.

Pour une plus grande modularité et adaptabilité du dispositif selon la présente invention, au moins un support est avantageusement une pièce distincte munie de moyens d'assemblage, et la base et/ou au moins un bras comporte des moyens d'assemblage complémentaires permettant de recevoir ledit support. Dans une telle variante de réalisation, lesdits moyens d'assemblage et lesdits moyens d'assemblage complémentaires permettent de préférence un assemblage et un verrouillage réversible par déformation élastique. De cette manière, il n'y a pas de risque de démontage involontaire du support.

La présente invention concerne également un tronçon de fuselage d'aéronef, comportant des cadres, une peau extérieure fixée sur les cadres à l'aide de pièces de fixation appelées stabilisateurs, au moins un matelas isolant, caractérisé en ce qu'un matelas isolant est fixé sur un cadre à l'aide d'au moins un dispositif tel que décrit ci-dessus, de telle sorte que ledit cadre se trouve entre les bras dudit dispositif et que ledit matelas isolant se trouve entre ledit cadre et ledit dispositif.

Dans un tel tronçon de fuselage d'aéronef les branches de la partie en forme de U sont par exemple disposées de part et d'autre d'une paroi d'un stabilisateur. De la sorte, une indexation de la position du dispositif par rapport à la structure de l'aéronef est réalisée.

Pour réaliser une meilleure isolation, on peut prévoir qu'un même matelas isolant recouvre d'une part une portion de surface de la peau extérieure et d'autre part au moins partiellement un tronçon de cadre. Dans ce cas, un matelas de peau fait également office de matelas de cadre et cela permet d'éviter un raccord entre deux matelas isolants.

Dans un tronçon de fuselage d'aéronef selon la présente invention, au moins un matelas isolant peut être relié à un matelas isolant voisin à l'aide d'un système à crochets et à boucles, par exemple un système de liaison connu sous la marque déposée Velcro.

Enfin, la présente invention concerne également un aéronef, caractérisé en ce qu'il comporte au moins un tronçon de fuselage tel que décrit ci-dessus.

Des détails et avantages de la présente invention ressortiront mieux de la description qui suit, faite en référence aux dessins schématiques annexés sur lesquels:
- la figure 1 représente une pièce centrale d'un dispositif selon l'invention sans support de systèmes,
- la figure 2 est une vue de côté de la pièce de la figure 1,
- la figure 3 montre un dispositif correspondant à la pièce centrale des figures 1 et 2 en position dans un aéronef,
- la figure 4 montre une structure dans un aéronef destinée à recevoir un dispositif de maintien selon la présente invention,
- les figures 5 et 6 montrent le dispositif de la figure 3 positionné par rapport à la structure montrée sur la figure 4,
- la figure 7 est une vue similaire à la figure 1 pour une première variante de réalisation d'un dispositif de maintien selon la présente invention,
- la figure 8 montre une seconde variante de réalisation d'un dispositif de maintien selon l'invention, monté sur un cadre de la structure de la figure 4 dans une première vue en perspective,
- la figure 9 montre sous un autre angle des éléments de la figure 8,
- la figure 10 est une vue en perspective d'une pièce centrale d'une quatrième forme de réalisation d'un dispositif de maintien selon la présente invention,
- la figure 11 montre la pièce centrale de la figure 10 sous un autre angle,
- la figure 12 montre la pièce centrale des figures 10 et 11 équipées de supports et formant ainsi un dispositif selon l'invention,
- la figure 13 est une vue similaire à la figure 12, avec une platine de maintien supplémentaire,
- la figure 14 montre le dispositif de la figure 13 dans son environnement,
- la figure 15 montre un premier support pouvant être monté sur un dispositif de maintien selon la présente invention,
- la figure 16 montre un autre type de support pouvant être monté sur un dispositif de maintien selon la présente invention,
- la figure 17 montre un troisième type de support pouvant être monté sur un dispositif de maintien selon la présente invention, et
- la figure 18 montre un quatrième type de support pouvant être monté sur un dispositif de maintien selon la présente invention.

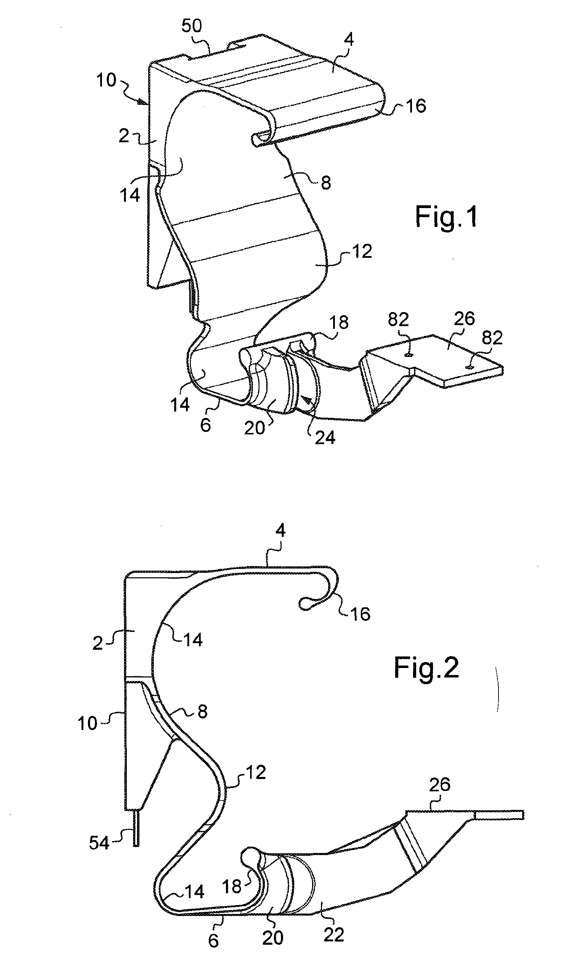

Les figures 1 et 2 représentent une pièce en forme d'étrier comportant une base 2 de laquelle s'étendent deux bras.

Arbitrairement, on supposera que la base 2 s'étend sensiblement dans un plan vertical et que les bras sont disposés de telle sorte qu'on ait un bras supérieur 4 et un bras inférieur 6.

La base 2 présente une face intérieure 8 et une face extérieure 10. La face intérieure 8, disposée entre le bras supérieur 4 et le bras inférieur 6, se présente sous la forme d'un ruban formant une vague 12 entre deux creux 14.

La face extérieure 10 de la base 2 est sensiblement plane (et verticale). Elle s'étend sur tout ou partie de la hauteur de la base 2.

La pièce montrée sur les figures 1 et 2 est par exemple réalisée en matière synthétique moulée et l'espace entre la face intérieure 8 et la face extérieure 10 est par exemple remplie de cette matière synthétique. En variante, on pourrait avoir une pièce creuse, le lien entre la face intérieure 8 et la face extérieure 10 se faisant alors à l'aide de parois latérales.

Le bras supérieur 4 ne forme qu'une seule pièce avec la base 2. On suppose qu'il s'étend dans un plan horizontal, perpendiculairement à la face extérieure 10 de la base 2. Ce bras supérieur 4 est sensiblement plan et se termine à son extrémité libre par un retour orienté vers l'intérieur de la pièce (c'est-à-dire entre les deux bras de celle-ci) et dirigé vers la base 2, de manière à former un premier crochet 16.

Le bras inférieur 6 s'étend lui aussi dans un plan sensiblement horizontal, perpendiculairement à la face extérieure 10 de la base 2. Il présente en outre également un second crochet 18 recourbé vers la base 2 à l'intérieur de la pièce.

Le bras inférieur 6, et plus précisément le second crochet 18, se prolonge par une partie en U présentant deux branches sensiblement parallèles. On remarque sur les figures la présence d'une première branche 20 relativement courte et d'une seconde branche 22 bien plus longue que la première branche 20. La base de la partie en forme de U est formée par la zone médiane du second crochet 18. Comme il ressort des figures, la première branche 20 et la seconde branche 22 s'étendent à partir du second crochet 18 en s'éloignant de la base 2. L'espace entre la première branche 20 et la seconde branche 22 forme un logement 24. La seconde branche 22 s'étend parallèlement à la première branche 20 dans un plan vertical sensiblement perpendiculaire à la face extérieure 10 de la base 2 et porte à son extrémité libre un plateau 26 sensiblement horizontal.

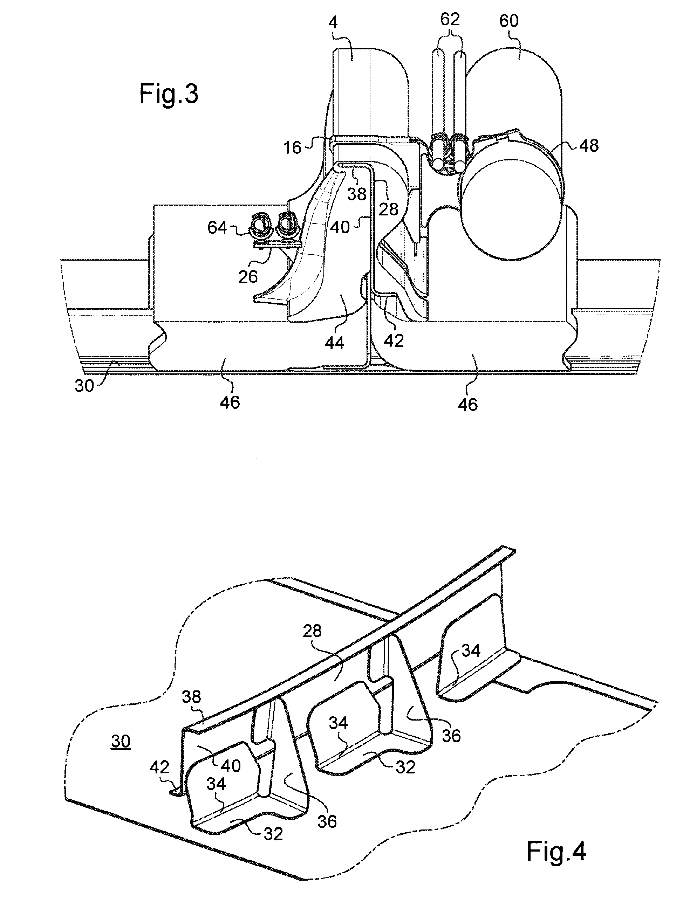

La pièce montrée sur les figures 1 et 2 est destinée à être équipée de supports, comme illustré sur les figures 3, 5 et 6 pour permettre la fixation de systèmes sur une structure telle celle montrée sur la figure 4. La figure 3 illustre un ensemble intégrant la structure montrée sur la figure 4, des matelas isolants et un dispositif pour le maintien d'un matelas isolant et la fixation de systèmes selon la présente invention et comportant la pièce montrée sur les figures 1 et 2.

La structure montrée sur la figure 4 présente un cadre 28 sur lequel est fixée une peau 30 à l'aide de pièces appelées stabilisateurs 32. Chaque stabilisateur présente une partie formant équerre 34 pour permettre de relier la peau 30 au cadre 28 et une nervure 36 qui s'étend perpendiculairement aux deux faces de l'équerre 34 et qui permet ainsi de rigidifier la liaison entre le cadre 28 et la peau 30.

On remarque sur la figure 4 que le cadre 28 est en forme de Z. En reprenant l'orientation définie précédemment, le cadre 28 présente ainsi un rebord supérieur 38, une âme 40 et un rebord inférieur 42. Le cadre 28 est une pièce profilée en arc de cercle. On suppose toutefois ici en première approximation qu'il s'agit d'une pièce profilée rectiligne. Dans cette approximation, on suppose alors que l'âme 40 s'étend dans un plan vertical (parallèle à la face extérieure 10) et que les rebords 38 et 42 s'étendent quand à eux perpendiculairement à l'âme 40 dans un plan horizontal. Comme on peut le voir sur les dessins, le rebord supérieur 38 s'étend d'un côté de l'âme 40 tandis que le rebord inférieur 42 s'étend de l'autre côté de l'âme.

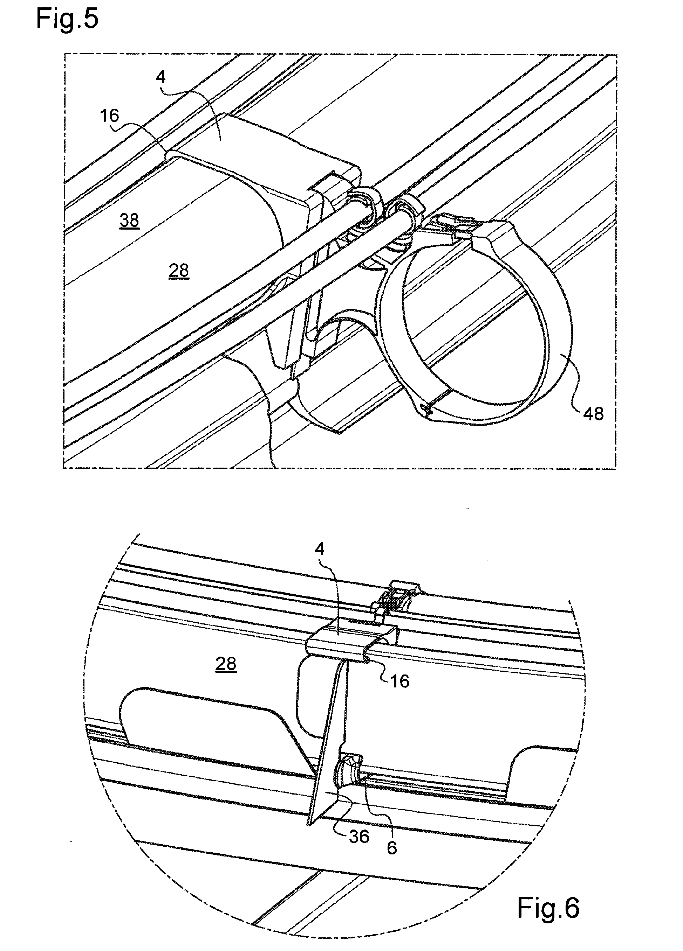

Les figures 5 et 6 montrent comment le dispositif selon l'invention est positionné par rapport à la structure montrée sur la figure 4. Le bras supérieur 4 passe au-dessus du rebord supérieur 38 et le premier crochet 16 vient autour du bord libre du rebord supérieur 38 du cadre 28. Au niveau inférieur, le rebord inférieur 42 du cadre 28 vient se loger dans un creux 14 de la face intérieure 8 de la base 2.

Comme on peut le voir sur la figure 3, un matelas isolant appelé matelas de cadre 44 est disposé autour du cadre 28, entre ce dernier et la pièce montrée sur les figures 1 et 2. Grâce à l'élasticité de cette pièce, le matelas de cadre 44 est fixement maintenu sur le cadre 28. La pièce des figures 1 et 2 réalise un serrage au niveau du premier crochet 16 et de la vague 12. L'extrémité libre du second crochet 18 vient quant à elle en appui sur une face de l'âme 40, à proximité du rebord inférieur 42.

Sur la figure 3, on remarque également la présence de matelas isolants contre la peau 30 extérieure. Ces matelas isolants se présentent sous la forme de lés s'étendant à chaque fois entre deux cadres 28. Chacun de ces matelas est appelé matelas de peau 46. Pour assurer une bonne continuité dans l'isolation, le matelas de cadre 44 est fixé à chacun des matelas de peau 46 qui se trouve de part et d'autre du cadre 28. On peut prévoir ici un système de liaison à boucles et crochets plus connu sous la marque déposée Velcro.

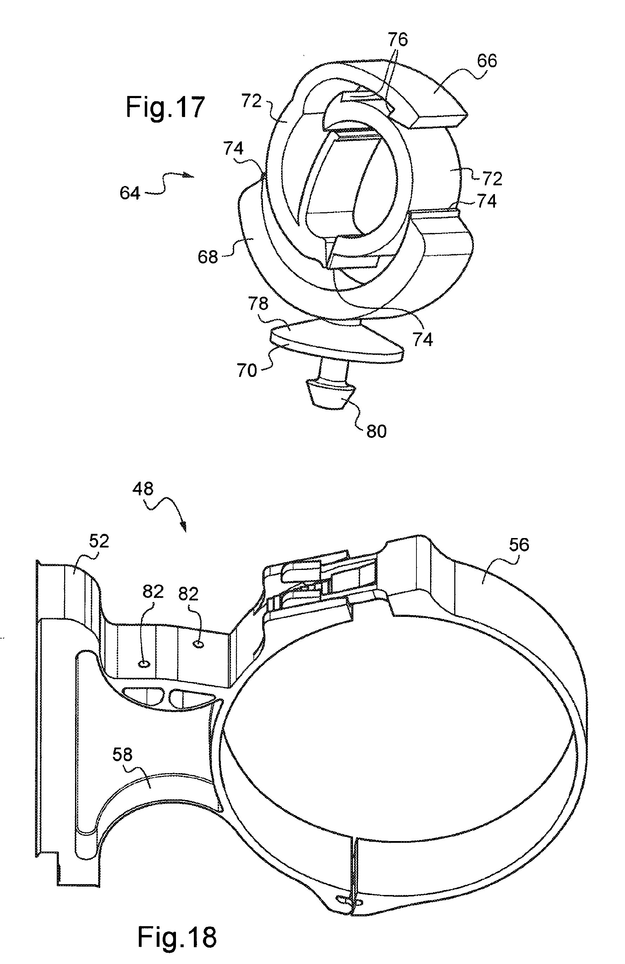

Comme on peut le voir sur les figures 3, 5 et 6, la pièce montrée sur les figures 1 et 2 porte des supports de systèmes. Ainsi, la face extérieure 10 de la base 2 porte un premier support de conduit 48 tel celui montré sur la figure 18. Le montage du premier support de conduit 48 se fait sur la base 2 par une fixation de type tenon/mortaise. Comme on peut le voir notamment sur la figure 1, la face extérieure 10 comporte une rainure 50 dans laquelle vient coulisser un pied 52 de forme complémentaire du premier support de conduit 48. Il est prévu que le pied 52 ne puisse pénétrer dans la rainure 50 que par un seul côté et que lorsque le pied 52 coulisse dans la rainure 50 et arrive en fin de course, des moyens de verrouillage permettent de maintenir le premier support de conduit 48 sur la base 2. Une languette 54 prévue sur la base 2 sert au déverrouillage desdits moyens de verrouillage.

Le premier support de conduit 48 comporte en outre un collier 56 monté sur un socle 58 ne formant qu'une seule pièce avec le pied 52. Le collier 52 est de taille adaptée pour recevoir un conduit d'air 60 comme illustré sur la figure 3.

Des conduits électriques 62 peuvent également être fixés par rapport à la structure montrée sur la figure 4 avec un dispositif selon la présente invention. Dans la forme de réalisation représentée, des seconds supports de conduit 64 sont prévus. Un tel second support de conduit 64 comporte une base 68 surmontant un pied 70 et portant elle-même deux mâchoires 72.

La base 68 présente la forme d'une bande incurvée. Chacune de ses deux extrémités forme une charnière 74 sur laquelle est articulée une mâchoire 72 de manière à pouvoir pivoter par rapport à la base 68. Chacune des mâchoires 72 se présente aussi sous la forme globale d'une bande incurvée. Les deux mâchoires 72 sont reliées entre elles par une troisième charnière 74.

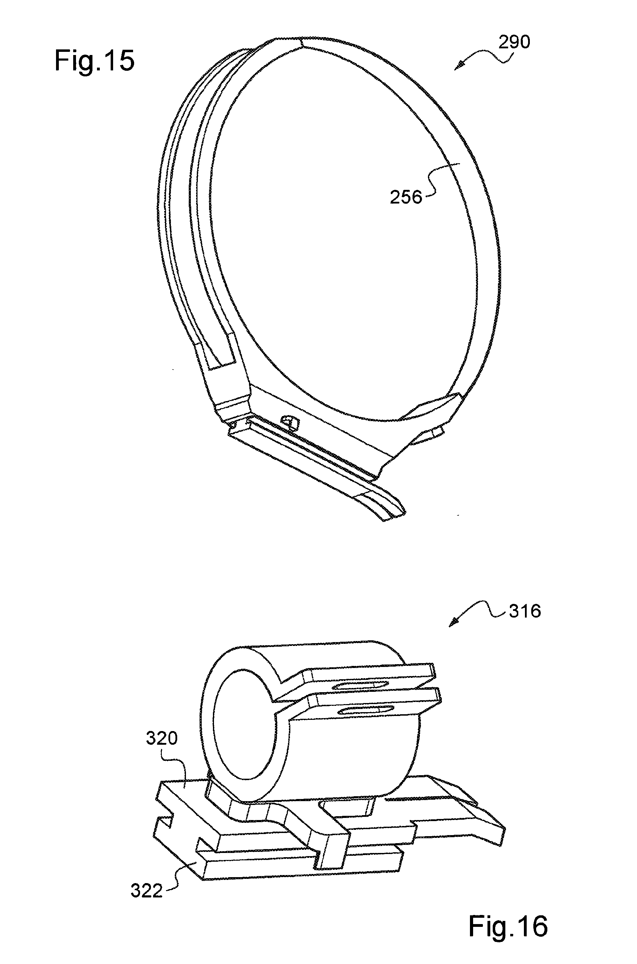

Le second support de conduit 64 est montré sur la figure 17 en position fermée. En position ouverte, les mâchoires 72 sont pivotées d'environ 90° vers l'extérieur par rapport à la position montrée sur cette figure 16 et forment ainsi un W. En venant appuyer un conduit électrique 62 au centre de ce W, les mâchoires 72 se referment pour venir dans la position montrée sur la figure 16 et emprisonner le conduit électrique 62 correspondant. On peut remarquer que grâce à la présence d'une languette extérieure 66 et un jeu de crochets 76, le second support de conduit 64 est verrouillé en position fermée, interdisant tout retrait involontaire du conduit électrique 62 hors du logement prévu sur le second support de conduit 64.

Le pied 70 du second support de conduit 64 comporte une platine 78 circulaire de laquelle s'étend, du côté opposé à la base 68, une tige présentant une tête tronconique 80. Cette dernière est réalisée dans une matière élastique telle du caoutchouc ou un matériau synthétique similaire. Son sommet forme un cercle de diamètre inférieur au diamètre d'alésages 82 formés d'une part sur le socle 58 et d'autre part sur le plateau 26. La base de la tête tronconique 80 forme quant à elle un cercle de diamètre supérieur au diamètre des alésages 82.

De la sorte, la tête tronconique 80 peut être introduite à travers un alésage 82 mais une fois que la base de cette tête tronconique 80 a traversé ledit alésage 82, il devient difficile de la retirer dans l'autre sens, la périphérie de la base de la tête tronconique 80 venant reposer à plat autour de l'alésage 82 correspondant.

La position du dispositif pour le maintien d'un matelas isolant et la fixation de systèmes décrit ci-dessus est indexée grâce à la présence de la partie en U et du logement 24 correspondant. Ce logement est adapté pour recevoir une nervure 36 d'un stabilisateur 32.

Le dispositif de maintien d'un matelas isolant et de fixation de systèmes décrit ci-dessus permet, avec un seul dispositif, de fixer des systèmes de deux côtés d'un même cadre. En effet, on remarque qu'une partie du dispositif passe sous le cadre pour permettre la fixation de systèmes de l'autre côté du cadre. Comme on peut le voir sur la figure 3, à l'endroit de cette "traversée" de cadres, le matelas de cadre 44 est adapté de manière à permettre de réaliser également au niveau de la seconde branche 22 une bonne isolation.

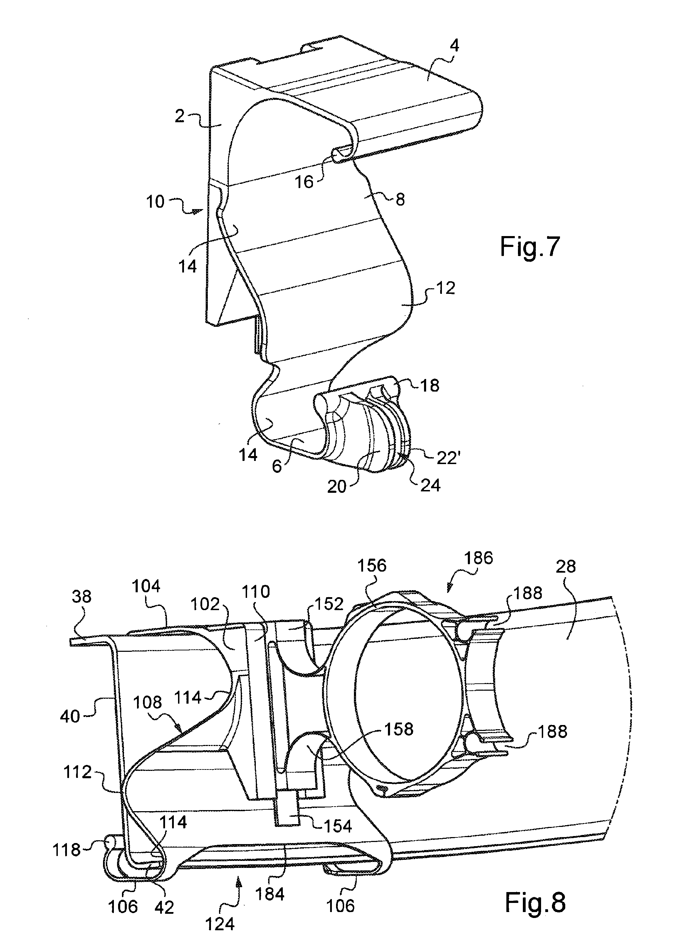

La figure 7 illustre une variante de réalisation dans laquelle ladite "traversée" de cadre n'est pas réalisée. La pièce montrée sur la figure 7 correspond à la pièce montrée sur les figures 1 et 2. La seule différence se situe ici au niveau de la seconde branche 22. On a ici, à la place de la seconde branche 22 des figures 1 et 2, une seconde branche 22' identique à la première branche 20. La partie en forme de U au niveau du second crochet 18 réalise ici également un logement 24 qui sert à l'indexation du dispositif lorsque celui-ci est monté sur un cadre.

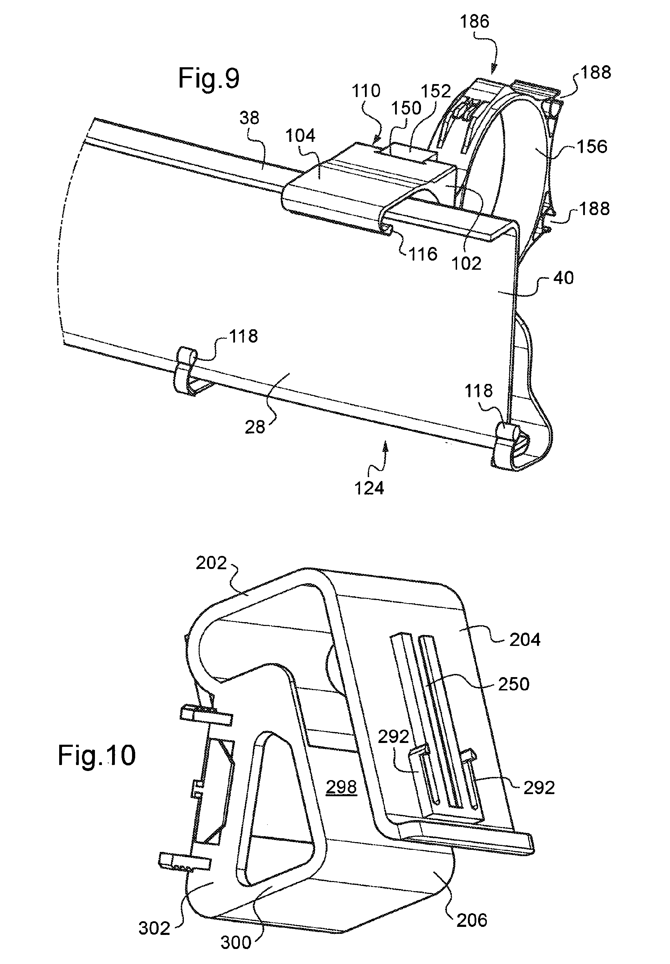

Les figures 8 et 9 illustrent une troisième forme de réalisation d'un dispositif de maintien de matelas et de fixation de systèmes selon la présente invention. Dans cette variante de réalisation, l'indexation de la position du dispositif sur la structure montrée sur la figure 4 ne se fait plus par rapport à une nervure 36 d'un stabilisateur 32 mais par rapport à une équerre 34 d'un tel stabilisateur 32.

La structure de cette nouvelle forme de réalisation est proche de celle de la forme de réalisation décrite plus haut et de sa variante.

Pour cette nouvelle forme de réalisation, on retrouve ainsi notamment une base 102 et un bras supérieur 104. On suppose ici que le dispositif est orienté de la même manière que précédemment. La base 102 s'étend donc dans un plan sensiblement vertical tandis que le bras supérieur 104 s'étend quant à lui sensiblement horizontalement. La base 102 présente ici aussi une face intérieure 108 et une face extérieure 110. Dans cette variante de réalisation, on retrouve également une face intérieure formant une vague 112 disposée entre deux creux 114. Une différence ici est que la face intérieure 108 est de largeur restreinte du côté du bras supérieur 104 par rapport à l'extrémité inférieure de la face intérieure 108. Cette dernière présente un bord inférieur 184. A partir de chacune des extrémités de ce bord inférieur 184, s'étend à chaque fois un bras inférieur 106. Chaque bras inférieur 106 présente une partie horizontale s'étendant à partir de la base 102 et présente à son extrémité libre un second crochet 118. Un logement 124 est ainsi défini entre les deux bras inférieurs 106.

Les deux bras inférieurs 106 et le bord inférieur 184 forment une partie en U, les deux bras 106 s'étendant parallèlement. L'écartement entre les deux bras inférieurs 106 est adapté pour recevoir une équerre 34 d'un stabilisateur 32.

La face extérieure 110 présente elle aussi une rainure 150 en tout point similaire à la rainure 50 du mode de réalisation des figures 1 et 2. Cette rainure 150 est destinée à coopérer avec le premier support de conduit 48 montré sur la figure 18. On retrouve ici des moyens de verrouillage similaires ainsi qu'une languette 154 de déverrouillage. Sur les figures 8 et 9, on a représenté un troisième support de conduit 186 qui vient coopérer avec la face extérieure 110 de la base 102 exactement de la même manière que le premier support de conduit 48. Ce troisième support de conduit 186 comporte donc un pied 152 en tout point similaire au pied 52 décrit précédemment. Ce pied 152 porte un collier 156 par l'intermédiaire d'un socle 158. Dans la forme de réalisation montrée sur les figures 8 et 9, le socle 158 ne présente pas d'alésages tels les alésages 82 réalisés sur le socle 58. Une variante de réalisation pourrait toutefois prévoir de tels alésages, ou d'autres moyens pour recevoir un support de système.

Ici, dans cette forme de réalisation, le collier 156 du troisième support de conduit 186 est prévu pour la fixation d'une conduite d'air. À sa périphérie extérieure, le collier 156 présente deux logements 188 destinés chacun à recevoir un conduit électrique, tel les conduits électriques 62 montrés sur la figure 3.

Le dispositif de maintien de matelas et de fixation de systèmes montré sur les figures 8 et 9 peut être utilisé dans un environnement similaire à celui montré sur les figures 3 et 4. Par souci de clarté, on n'a pas représenté sur les figures 8 et 9 les matelas isolants. Ici aussi, un matelas de cadre est destiné à venir prendre place entre le matelas de cadre 38 et le dispositif selon l'invention représenté sur les figures 8 et 9. On réalise ici aussi un maintien de ce matelas par élasticité à l'aide du premier crochet 116 monté à l'extrémité libre du bras supérieur 104 et par appui de la vague 112 qui vient pincer le matelas de cadre contre l'âme 40 du cadre 38. L'extrémité libre des bras inférieurs 106 forme chacune un second crochet 118 qui vient en appui sur l'âme 40 du cadre 38. Ici, l'indexation du dispositif de maintien de matelas et de fixation de systèmes se fait en positionnant ledit dispositif par rapport à une équerre 34 d'un stabilisateur 32.

Les figures 10 à 14 montrent une autre forme de réalisation d'un dispositif de maintien de matelas et de fixation de systèmes selon la présente invention. Dans cette forme de réalisation, on retrouve comme dans les formes de réalisation précédentes, une base à partir des extrémités de laquelle s'étendent deux bras. Dans cette forme de réalisation, on retrouve ainsi une base 202. En reprenant la même orientation que précédemment, dans cette forme de réalisation, il convient alors de considérer que la base 202 s'étend ici dans un plan horizontal. En outre, la base 202 est disposée en position supérieure par rapport au dispositif décrit. On retrouve ici aussi, comme dans les autres formes de réalisation décrites précédemment, des bras s'étendant à partir des extrémités de la base du dispositif. Dans les formes de réalisation décrites précédemment, il s'agissait des bras supérieurs 4, 104 et des bras inférieurs 6, 106. Dans cette forme de réalisation, les bras s'étendent selon une direction sensiblement verticale. On a alors un premier bras 204 et un second bras 206.

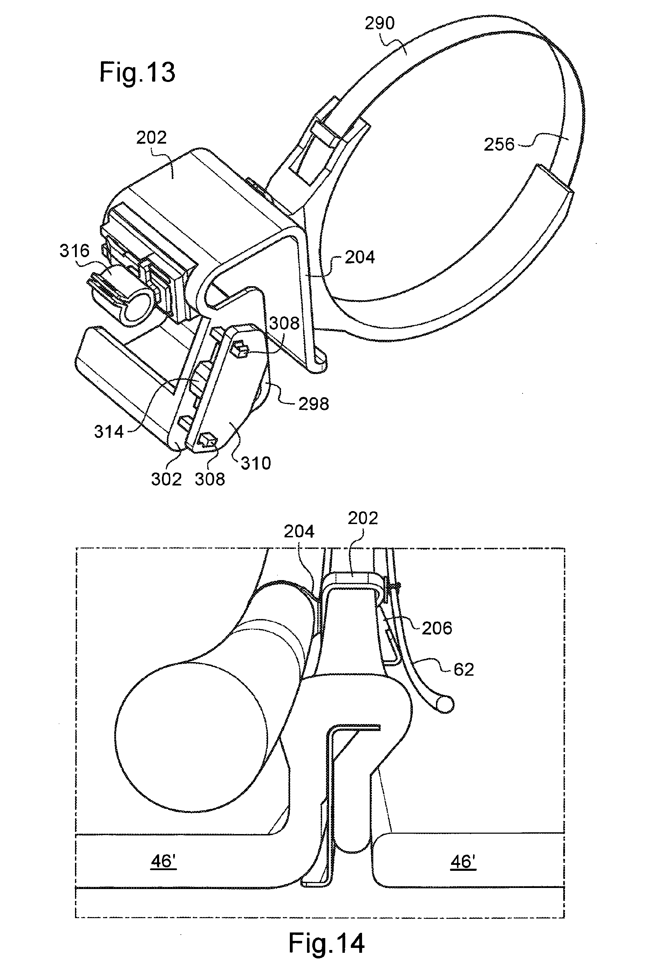

Le premier bras 204 est sensiblement plan. Il présente des moyens permettant la fixation d'un support tel par exemple qu'un quatrième support de conduit 290 montré sur la figure 15. Le premier bras 202 comporte également sur sa face extérieure, c'est-à-dire sa face opposée au second bras 206, une rainure 250 de manière à pouvoir recevoir le quatrième support de conduit 290 et être lié à celui-ci par une liaison de type tenon/mortaise. Comme on peut le voir notamment sur la figure 10, le premier bras 204 porte également de part et d'autre de la rainure 250 des languettes 292 permettant de réaliser un verrouillage du quatrième support de conduit 290 dans la rainure 250. On remarque sur la figure 14 que le quatrième support de conduit 290 présente quant à lui une nervure 294 de forme complémentaire à celle de la rainure 250 ainsi que des arrêts 296 destinés à coopérer avec les languettes 292 de manière à réaliser un verrouillage du quatrième support de conduit 290 sur le premier bras 204. Comme il ressort de la figure 15, le quatrième support de conduit comporte un collier 256 destiné à recevoir un conduit d'air.

Le second bras 206 présente une forme plus complexe que le premier bras 204. En vue de côté, l'espace entre le premier bras 204 et le second bras 206 forme un L, la base du L étant disposée contre la base 202. En partant de la base 202, le second bras 206 est donc tout d'abord relativement éloigné du premier bras 204 puis se rapproche de celui-ci. Le second bras 206 comporte une partie plane 298 qui correspond à la partie rapprochée du premier bras 204. L'extrémité de la partie plane 298, opposée à la base 202, porte un rebord 300 qui s'étend à partir de la partie plane 298 parallèlement à la base 202 en s'éloignant du premier bras 204. Une paroi latérale 302 s'étend dans un plan perpendiculaire à la partie plane 298 et au rebord 300 en reliant ladite partie plane 298 et ledit rebord 300.

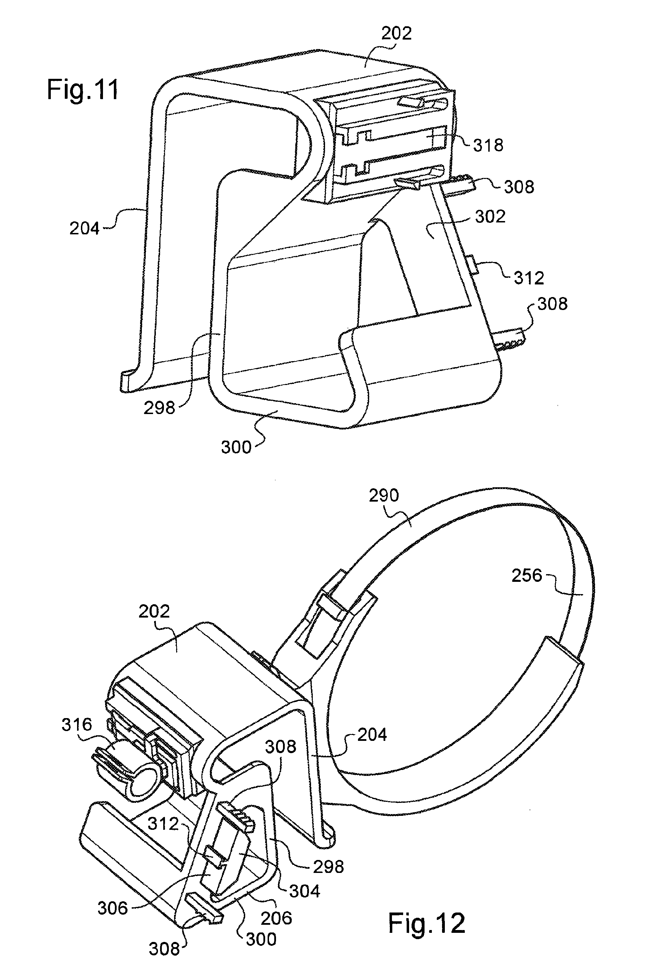

On remarque (figure 12) sur la paroi latérale 302 la présence d'une paroi parallèle 304 à ladite paroi latérale 302 et reliée à cette dernière par une partie de liaison 306 s'étendant perpendiculairement à la paroi latérale 302 et à la paroi parallèle 304.

De part et d'autre de la paroi parallèle 304 s'étend à chaque fois une tige 308 qui s'étend à partir de la paroi latérale 302 et perpendiculairement à celle-ci. Comme on peut le voir sur la figure 13, ces tiges 308 dentées sont destinées à recevoir une platine 310 qui, en position montée, s'étend parallèlement à la paroi latérale 302. Pour un meilleur maintien de la platine 310, il est prévu sur la partie de liaison 306 un petit rail de guidage 312 qui vient coopérer avec une rainure réalisée dans une saillie 314 s'étendant à partir d'une face de la platine 310.

Comme évoqué plus haut, le dispositif représenté sur les figures 10 à 14 peut recevoir un support tel le quatrième support de conduit 290 montré sur la figure 15, ce dernier étant alors monté sur le premier bras 204. On remarque également sur les figures 12 et 13 que ce dispositif porte un cinquième support de conduit 316, qui est représenté plus en détail sur la figure 16. Ce cinquième support de conduit 315 est destiné plus particulièrement à la fixation d'un conduit électrique. Pour le montage de ce cinquième support 316, une rainure 318 est réalisée sur la face extérieure du second bras 206, à proximité immédiate de la base 202. Le cinquième support de conduit 316 présente un pied 320 portant un rail profilé 322 de profil complémentaire à celui de la rainure 318. Comme il ressort des figures 11 et 16, des moyens de verrouillage sont également prévus pour permettre de garantir un bon maintien du cinquième support de conduit 316 dans la rainure 318.

Pour le montage du dispositif, le premier bras 204 et le second bras 206 sont écartés l'un de l'autre de manière à venir chevaucher un cadre 28. Comme indiqué plus haut, l'espace entre le premier bras 204 et le second bras 206 présente une forme de L et est ainsi adapté à recevoir d'une part l'âme 40 du cadre 28 (entre le premier bras 204 et le second bras 206) et d'autre part le rebord supérieur 38 dudit cadre 28 (à proximité de la base 202). Par élasticité, le dispositif décrit vient alors maintenir un matelas de cadre recouvrant le cadre 28.

La figure 14 propose un montage original dans lequel il n'y a plus de matelas de cadre 44 mais uniquement des matelas de peau 46'. Le matelas de peau 46' est prolongé d'un côté pour recouvrir un cadre 28. On évite ainsi une liaison entre deux matelas. En effet, il suffit de prévoir une liaison entre deux matelas de peau 46' successifs. Les dispositifs de maintien d'un matelas isolant et de fixation de systèmes montrés sur les figures 10 à 13 permettent un tel montage sans matelas de cadre.

Le dispositif décrit ci-dessus, lorsqu'il est mis en place sur le cadre 28, est placé de telle manière qu'une nervure 36 d'un stabilisateur 32 vienne prendre place dans le logement se trouvant entre la paroi latérale 302 et la paroi parallèle 304. De la sorte, la position du dispositif de maintien de matelas isolant et de fixation de systèmes est indexée par rapport au cadre 28. Le matelas de peau 46' venant également recouvrir la nervure 36 du stabilisateur 32, la platine 310 vient participer à un meilleur maintien dudit matelas sur la structure. Cette platine 310 permet également une meilleure fixation du dispositif sur la structure.

Les divers dispositifs décrits ci-dessus permettent donc le maintien d'un matelas isolant sur un cadre ainsi que la fixation de systèmes par rapport à la structure d'un aéronef.

Un avantage de tous ces dispositifs est qu'ils peuvent facilement s'adapter notamment en ce qui concerne la fixation des systèmes. Il apparaîtra en effet à l'homme du métier que les dispositifs décrits sont modulables. On peut par exemple disposer un support de conduit électrique à la place d'un support de conduit d'air. Il est également possible d'adapter le nombre de supports de conduits portés par le dispositif. On remarque en outre que les dispositifs décrits ci-dessus permettent de s'adapter à de nombreuses solutions pour le passage des systèmes supportés et peuvent supporter tous types de systèmes car il suffit d'adapter les supports montés sur les bras et/ou les branches aux systèmes à fixer.

Les dispositifs selon la présente invention présentent également le grand avantage de pouvoir réaliser le supportage de câbles et de conduites sans avoir à percer ou à modifier la structure de l'aéronef. En outre, mis à part la première forme de réalisation montrée sur les figures 1 à 6, il n'est pas nécessaire d'adapter les matelas isolants pour la pose et le montage des dispositifs selon la présente invention.

Le montage de ces divers dispositifs peut se faire sans outils ou tout du moins sans outils spécifiques. Ces dispositifs sont également conçus pour pouvoir être facilement remontés et démontés dans la même position qu'avant démontage.

Enfin, les dispositifs selon la présente invention sont faciles et rapides à mettre en oeuvre. Le temps de montage (et de démontage) est restreint. De plus, si les dispositifs décrits sont réalisés en matière synthétique, il est possible d'avoir des dispositifs de poids réduit, ce qui est bien entendu avantageux pour un montage dans un aéronef.

La présente invention ne se limite pas aux formes de réalisation décrites ci-dessus à titre d'exemples non limitatifs, ni aux variantes évoquées. Elle concerne également toutes les variantes de réalisation à la portée de l'homme du métier dans le cadre des revendications ci-après.

## Revendications

1. Dispositif pour le maintien d'un matelas isolant et la fixation de systèmes (60, 62) dans un aéronef, ledit dispositif comportant une base (2 ; 102 ; 202) présentant deux extrémités à partir de chacune desquelles s'étend un bras (4, 6 ; 104, 106 ; 204, 206)
- au moins un desdits bras (6 ; 106 ; 206) présentant une partie en forme de U présentant deux branches (20, 22 ; 106 ; 302, 304) sensiblement parallèles, dont l'écartement est adapté pour recevoir une paroi (36 ; 34) d'un stabilisateur (32) d'un fuselage de l'aéronef aux fins d'indexation du dispositif le long d'un cadre (28) du fuselage,
- ledit dispositif comportant en outre au moins un support (48, 64, 186, 290, 316) pour recevoir un système,
**caractérisé en ce que**:
- la base (2 ; 102 ; 202) de forme allongée, les bras (4, 6 ; 104, 106 ; 204, 206) et la partie en forme de U (20, 22 ; 106 ; 302, 304) ne forment qu'une seule pièce dont la forme et l'élasticité sont adaptées pour permettre le montage du dispositif sur le cadre (28) recouvert d'un matelas (44, 46) et le maintien par pincement sur le cadre à la fois dudit matelas et du dispositif.

2. Dispositif selon la revendication 1, **caractérisé en ce que** la base (2 ; 102) comprend une face intérieure (8 ; 108) formant une vague (12 ; 112) entre deux creux (14 ; 114), et **en ce que** le premier bras (4, 104) se termine à son extrémité libre par un premier crochet (16 ; 116), lesquels vague (12 ;112) et crochet (16 ; 116) contribuent au serrage du dispositif autour du cadre (28).

3. Dispositif selon l'une des revendications 1 et 2, **caractérisé en ce que** la base (2 ; 102 ; 202) de forme allongée définit un plan, dit plan de référence, et **en ce que** les bras (4, 6 ; 104, 106 ; 204, 206) s'étendent sensiblement perpendiculairement audit plan de référence.

4. Dispositif selon l'une des revendications 1 à 3, **caractérisé en ce qu'**au moins un support (48, 64, 186, 290, 316) est une pièce distincte munie de moyens d'assemblage, et **en ce que** la base et/ou au moins un bras comporte des moyens d'assemblage complémentaires permettant de recevoir ledit support.

5. Dispositif selon la revendication 4, **caractérisé en ce que** lesdits moyens d'assemblage et lesdits moyens d'assemblage complémentaires permettent un assemblage et un verrouillage réversible par déformation élastique.

6. Tronçon de fuselage d'aéronef, comportant des cadres, une peau extérieure fixée sur les cadres (28) à l'aide de pièces de fixation appelées stabilisateurs (32), au moins un matelas isolant (44, 46),
**caractérisé en ce qu'**il comprend au moins un dispositif selon l'une des revendications 1 à 5, chevauchant un cadre (28) recouvert d'un matelas isolant (44 ; 46') de telle sorte que ledit cadre (28) se trouve entre les bras dudit dispositif et que ledit matelas isolant (44 ; 46') se trouve entre ledit cadre et ledit dispositif, et **en ce que** les branches (20, 22 ; 106 ; 302, 304) de la partie en forme de U sont disposées de part et d'autre d'une paroi (36 ; 34) d'un stabilisateur (32).

7. Tronçon de fuselage d'aéronef selon la revendication 6, **caractérisé en ce qu'**un même matelas isolant recouvre d'une part une portion de surface de la peau (30) extérieure et d'autre part au moins partiellement un tronçon de cadre (28).

8. Tronçon de fuselage d'aéronef selon l'une des revendications 6 et 7, **caractérisé en ce qu'**au moins un matelas isolant est relié à un matelas isolant voisin à l'aide d'un système à crochets et à boucles.

9. Aéronef, **caractérisé en ce qu'**il comporte au moins un tronçon de fuselage selon l'une des revendications 6 à 8.

## Patentansprüche

1. Vorrichtung zum Halten einer Dämmmatte und zum Befestigen von Einrichtungen (60, 62) in einem Luftfahrzeug, wobei die Vorrichtung ein Basisteil (2; 102; 202) mit zwei Enden aufweist, von denen jeweils ein Arm (4, 6; 104, 106; 204, 206) ausgeht,
- wobei zumindest einer der Arme (6; 106, 206) einen U-förmigen Abschnitt mit zwei Schenkeln (20, 22; 106; 302, 304) aufweist, die im Wesentlichen parallel verlaufen und deren Entfernung dazu geeignet ist, eine Wand (36; 34) eines Stabilisators (32) von einem Rumpf des Luftfahrzeugs zum Zwecke der Indexierung der Vorrichtung entlang eines Spants (28) des Rumpfs aufzunehmen,
- wobei die Vorrichtung ferner zumindest einen Halter (48, 64, 186, 290, 316) zum Aufnehmen einer Einrichtung aufweist,
**dadurch gekennzeichnet, dass**
- das Basisteil (2; 102; 202) länglicher Form, die Arme (4, 6; 104, 106; 204, 206) und der U-förmige Abschnitt (20, 22; 106; 302, 304) ein einziges Bauteil bilden, dessen Form und Elastizität dazu geeignet sind, das Anbringen der Vorrichtung an den mit einer Matte (44, 46) überzogenen Spant (28) und den Halt zugleich von Matte und Vorrichtung durch Verklemmen am Spant zu gestatten.

2. Vorrichtung nach Anspruch 1,
**dadurch gekennzeichnet, dass** das Basisteil (2; 102) eine Innenseite (8; 108) aufweist, die eine Welle (12; 112) zwischen zwei Vertiefungen (14; 114) bildet, und dass der erste Arm (4, 104) an seinem freien Ende mit einem ersten Haken (16; 116) endet, welche Welle (12; 112) und welcher Haken (16; 116) zum Verspannen der Vorrichtung um den Spant (28) herum beitragen.

3. Vorrichtung nach einem der Ansprüche 1 und 2,
**dadurch gekennzeichnet, dass** das Basisteil (2; 102; 202) länglicher Form eine Ebene, die sogenannte Referenzebene, definiert, und dass die Arme (4, 6; 104, 106; 204, 206) sich im Wesentlichen senkrecht zu der Referenzebene erstrecken.

4. Vorrichtung nach einem der Ansprüche 1 bis 3,
**dadurch gekennzeichnet, dass** zumindest ein Halter (48, 64, 186, 290, 316) ein separates Teil ist, das mit Verbindungsmitteln versehen ist, und dass das Basisteil und/oder zumindest ein Arm komplementär ausgebildete Verbindungsmittel aufweist, mit denen der Halter aufgenommen werden kann.

5. Vorrichtung nach Anspruch 4,
**dadurch gekennzeichnet, dass** die Verbindungsmittel und die komplementär ausgebildeten Verbindungsmittel eine Verbindung und eine lösbare Verriegelung durch elastische Verformung gestatten.

6. Rumpfabschnitt eines Luftfahrzeugs, enthaltend Spante, eine Außenhaut, die an den Spanten (28) mit Hilfe von Befestigungsteilen, Stabilisatoren (32) genannt, befestigt ist, und zumindest eine Dämmmatte (44, 46),
**dadurch gekennzeichnet, dass** er zumindest eine Vorrichtung nach einem der Ansprüche 1 bis 5 aufweist, die einen Spant (28) übergreift, welcher mit einer Dämmmatte (44; 46') überzogen ist, so dass der Spant (28) sich zwischen den Armen der Vorrichtung befindet und dass die Dämmmatte (44; 46') sich zwischen dem Spant und der Vorrichtung befindet, und dass die Schenkel (20, 22; 106; 302, 304) des U-förmigen Abschnitts beiderseits einer Wand (36; 34) eines Stabilisators (32) angeordnet sind.

7. Rumpfabschnitt eines Luftfahrzeugs nach Anspruch 6,
**dadurch gekennzeichnet, dass** eine gleiche Dämmmatte einerseits einen Flächenabschnitt der Außenhaut (30) und andererseits zumindest teilweise einen Spantabschnitt (28) überdeckt.

8. Rumpfabschnitt eines Luftfahrzeugs nach einem der Ansprüche 6 und 7,
**dadurch gekennzeichnet, dass** zumindest eine Dämmmatte mit Hilfe einer Klettverschlusseinrichtung mit einer benachbarten Dämmmatte verbunden ist.

9. Luftfahrzeug,
**dadurch gekennzeichnet, dass** es zumindest einen Rumpfabschnitt nach einem der Ansprüche 6 bis 8 aufweist.

## Claims

1. Device for holding an insulating blanket and for fastening systems (60, 62) in an aircraft, said device comprising a base (2; 102; 202) having two ends from each of which an arm (4, 6; 104, 106; 204, 206) extends,
- at least one of said arms (6; 106; 206) having a U-shaped part having two substantially parallel branches (20, 22; 106; 302, 304), the spacing of which is adapted to receive a wall (36; 34) of a stabilizer (32) of a fuselage of the aircraft for the purposes of indexing the device along a frame (28) of the fuselage,
- said device further comprising at least one support (48, 64, 186, 290, 316) for accommodating a system.
**characterized in that**:
- the base (2; 102; 202) of elongated shape, the arms (4, 6; 104, 106; 204, 206) and the U-shaped part (20, 22; 106; 302, 304) form only a single part the shape and elasticity of which are adapted to enable the mounting of the device on the frame (28) covered by a blanket (44, 46) and the holding by pinching on the frame of both the blanket and the device.

2. Device according to claim 1, **characterized in that** the base (2; 102) comprises an inside face (8; 108) forming a wave (12; 112) between two hollows (14; 114), and **in that** the first arm (4, 104) ends at its free end by a first hook (16; 116), which wave (12; 112) and hook (16; 116) contribute to the clamping of the device around the frame (28).

3. Device according to one of claims 1 and 2, **characterized in that** the base (2; 102; 202) of elongated shape defines a plane, referred to as reference plane, and **in that** the arms (4, 6; 104, 106; 204, 206) extend substantially perpendicular to the said reference plane.

4. Device according to one of claims 1 to 3, **characterized in that** at least one support (48, 64, 186, 290, 316) is a separate part equipped with assembly means, and **in that** the base and/or at least one arm comprises complementary assembly means enabling the receiving of the said support.

5. Device according to claim 4, **characterized in that** the said assembly means and the said complementary assembly means allow an assembly and a reversible locking by means of elastic deformation.

6. Aircraft fuselage section, comprising frames, an outer skin fastened onto the frames (28) with the aid of fastening parts referred to as stabilizers (32), and at least one insulating blanket (44, 46),
**characterized in that** it comprises at least one device according to one of claims 1 to 5, overlapping a frame (28) covered with an insulating blanket (44 ; 46') such that the said frame (28) is situated between the arms of the said device and that the said insulating blanket (44 ; 46') is situated between the said frame and the said device, and **in that** the branches (20, 22; 106; 302, 304) of the U-shaped part are disposed on respective opposite sides of a wall (36; 34) of a stabilizer (32).

7. Aircraft fuselage section according to claim 6, **characterized in that** the same insulating blanket covers a surface portion of the outer skin (30) and also at least partially a section of frame (28).

8. Aircraft fuselage section according to one of claims 6 and 7, **characterized in that** at least one insulating blanket is connected to a neighboring insulating blanket with the aid of a hook-and-loop system.

9. Aircraft, **characterized in that** it comprises at least one fuselage section according to one of claims 6 to 8.
